# EUROPEAN PATENT SPECIFICATION

(11) **EP 0 389 953 B1**
(45) Date of publication and mention of the grant of the patent: **29.11.1995**
(21) Application number: 90105366.0
(22) Date of filing: 21.03.1990
(51) Int. Cl.: G01H 3/12, G10K 11/32, G01N 29/22

(54) **Ultrasound generator assembly and ultrasonic acoustic microscope**
Ultraschallgenerator und akustisches Mikroskop mit Ultraschall
Générateur ultrasonore et microscope acoustique à ultrasons

(30) Priority: 25.03.1989 JP 72959/89; 25.03.1989 JP 72960/89
(43) Date of publication of application: 03.10.1990
(73) Proprietor: Toppan Printing Co., Ltd., Taito-ku Tokyo (JP)
(72) Inventor: Nakaso, Noritaka, c/o Toppan Printing Co., Tokyo (JP); Tsukahara, Yusuke, c/o Toppan Printing Co., Tokyo (JP); Saito, Masao, c/o Toppan Printing Co., Tokyo (JP); Ohira, Katsumi, c/o Toppan Printing Co., Tokyo (JP)
(74) Representative: Tiedtke, Harro, Dipl.-Ing.

(56) References cited:
- US-A- 3 666 979
- US-A- 4 028 933
- US-A- 4 682 497
- JAPANESE JOURNAL OF APPLIED PHYSICS, vol. 20, 1981, supplement 20-3, pages 73-76, Tokyo, JP (PROCEEDINGS OF THE 1ST SYMPOSIUM ON ULTRASONIC ELECTRONICS, Tokyo, 1980); N. CHUBACHI et al.: "Scanning acoustic microscope employing concave ultrasonic transducers".
- PATENT ABSTRACTS OF JAPAN, vol. 6, no. 52 (E-100)[930], 7th April 1982 & JP-A-56 165 486

## Description

### FIELD OF THE INVENTION

This invention relates to a plurality of improvements applicable to an ultrasound generator assembly and to an ultrasonic acoustic microscope. More specifically, this invention relates to a plurality of improvements described below. The first improvement is applicable to an ultrasound generator assembly comprising an ultrasound generator of which the ultrasound emitting surface is inclined with respect to the surface of an objective and an ultrasound receiver of which the ultrasound receiving surface is inclined with respect to the surface of the same objective, for the purpose to increase the accuracy thereof and to give the resolving power thereto and to give versatility for selection or adjustment of the inclination of each ultrasound generator and each ultrasound receiver with respect to an objective and to simplify the procedure for employment thereof. The second improvement is applicable to an ultrasonic acoustic microscope having an ultrasound generator of which the surface is inclined with respect to the surface of an objective and an ultrasound receiver of which the surface is inclined with respect to the surface of the same objective, for the purpose to increase the accuracy thereof and to give the resolving power thereto and to give versatility for selection or adjustment of the inclination of each ultrasound generator and each ultrasound receiver with respect to an objective and to simplify the procedure for employment thereof.

### BACKGROUND OF THE INVENTION

An ultrasound generator is defined as an equipment for generating or receiving an ultrasound, which usually is a piezoelectric crystal element which is a plate of a piezoelectric crystal or a piezoelectric body e.g. a zinc oxide plate sandwiched by a couple of electrodes.

The reflection characteristics of an ultrasound depend on the various physical characteristics of an objective on or inside of which the ultrasound is reflected. In addition to the elastic modulus, Young's modulus, etc. of the material of an objective, the reflection characteristics of an ultrasound depend on the layer structure of an objective. Whenever an ultrasound collides with the surface of a substrate having no particular layer structure, in an inclined direction specific to the material of the substrate, an elastic surface wave which is defined as a progressive wave traveling along the surface of and/or inside an objective is generated, independently of the frequency of the ultrasound. On the other hand, when an ultrasound collides with the surface of an objective having a layer structure, no elastic surface wave is generated, unless a specific condition which is a combination of the frequency of the ultrasound and the incident angle defined as an angle between the direction along which the ultrasound travels and the direction perpendicular to the surface on which the ultrasound is reflected, is satisfied. The most important parameter involving with an elastic surface wave is a phase velocity Vₚ defined by a formula : 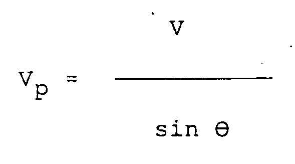
wherein :
V is the velocity of an ultrasound in a material in which the ultrasound is transmitted, and
ϑ is the incident angle defined as an angle between the direction along which an ultrasound travels and the direction perpendicular to the surface on which the sound is reflected.

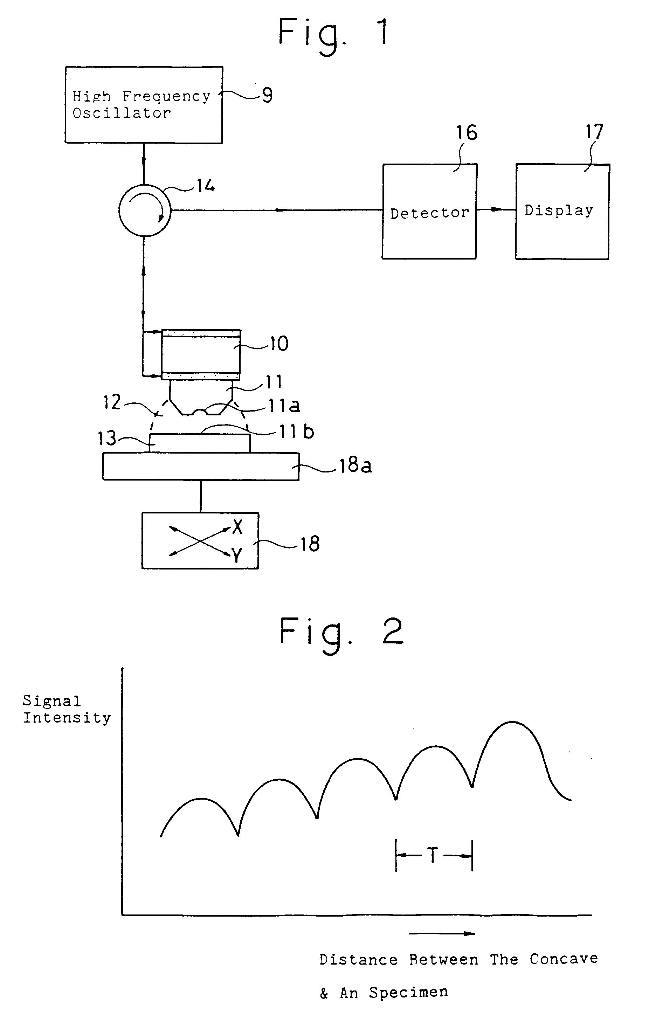

An exemplary equipment employing an ultrasound is an ultrasonic acoustic microscope, which is employable for inspecting the various physical characteristics of a material. Referring to a drawing, an ultrasonic acoustic microscope available in the prior art is described below. Referring to Fig. 1, a high frequency oscillator 9 supplies a high frequency electric signal having a frequency selected from the frequency range of 10 through 1,000 MHz towards an ultrasound generator (receiver) 10 for generating an ultrasound, which is transmitted through a delay element (an acoustic lens) 11 made of fused quartz etc. and which has a concave 11a at the bottom surface thereof. The reason why the delay element (an acoustic lens) 11 has a concave 11a at the bottom surface thereof is to focus the ultrasound on a small area (a focusing point) 11b on the surface of an objective. This effect for focusing an ultrasound or for condensing an ultrasound beam is realized by the difference in velocity of an ultrasound traveling in a delay element 11 and velocity of an ultrasound traveling in an ultrasound transimission liquid 12. A specimen 13 placed on a table 18a driven by an X-Y table drive 18 faces the foregoing concave 11a of the foregoing delay element (acoustic lens) 11 through an ultrasound transmission liquid 12, which is usually water.

The inherent function of an ultrasound transmittion liquid is to cause an ultrasound to readily pass therethrough. Therefore, any material can be employed for this purpose. For the purpose to give the focusing effect, however, a material which is usually employed as the material of an ultrasound transmission liquid is selected from the group of materials in which an ultrasound travels more slowly than in a delay element. Therefore, water is usually employed as the material of an ultrasound transmission liquid.

Since the X-Y table drive 18 is allowed to move in the X and Y directions, a focusing point 11b of the ultrasound is allowed to scan along the surface of the specimen 13. The ultrasound reflected on the surface of or inside the specimen 13 returns to the ultrasound generator (receiver) 10 which acts as an ultrasound receiver in this case, to be converted to a high frequency electric signal, which is input to a detector 16 through a circulator 14. The detector 16 detects the electric signal to employ the same for various purposes including displaying or the like using a display means 17 or the like.

As was described above, the ultrasonic acoustic microscopes available in the prior art are designed to have a single ultrasonic generator (receiver) 10 accompanied by a single delay element (acoustic lens) 11 having a concave 11a or a single ultrasonic generator (receiver) 10 having a concave (not shown). This causes various inherent disadvantages including a less magnitude in accuracy and sensitivity and difficulties in employing the resultant signals for quantitative treatment, such difficulties being caused by the nature of the signals, although the signals can be employed for displaying images on a display means.

One of the exceptions in which the ultrasonic acoustic microscopes available in the prior art can be employed for the quantitative measurement would be "The V (Z) curve method", which is employable for measurement of the phase velocity of an elastic surface wave, the phase velocity depending on the physical conditions of the layer structure and the physical parameters etc. of an objective on which an ultrasound is reflected. The procedure of this method is to measure the intensity of the reflected ultrasound, during a period in which the concave 11a of the delay element (the acoustic lens) 11 or the concave (not shown) of an ultrasound generator (receiver) is moved in the vertical direction. The relations between the measured intensity of the reflected ultrasound and the distance between the concave 11a of the delay element (the acoustic lens) 11 or the concave (not shown) of an ultrasound generator (receiver) and the surface of the specimen 13 turn out to be oscillatory, as is illustrated in Fig. 2. Referring to Fig. 2, Y-axis represents the measured intensity of the reflected ultrasound, and X-axis represents the distance between the concave 11a of the delay element (the acoustic lens) 11 or the concave (not shown) of an ultrasound generator (receiver) and the surface of the specimen 13. Referring to the drawing, T represents a period which is determined depending on the phase velocity which further depends on the elastic modulus of the material of the specimen 13. In this manner, an ultrasonic acoustic microscope available in the prior art can be exceptionally employed for measurement of and/or sensing various physical characteristics including the measurement of the thickness of each layer constituting a piled objective.

This exceptional method for employing the ultrasonic acoustic microscopes available in the prior art for a quantitative measurement is, however, inevitably accompanied by a disadvantage in which a longer time is required for a measurement, because the measurement procedure consists of a plurality of two independent steps including a plurality of vertical moves of the ultrasound generator (receiver) 10 and a plurality of horizontal scannings of the same.

After all, the ultrasonic acoustic microscopes available in the prior art can hardly be free from disadvantages in which it is not easy for employing the ultrasonic acoustic microscopes available in the prior art for the purposes of quantitative measurement in a satisfactory magnitude of accuracy and sensitivity, requiring a less length of time therefor.

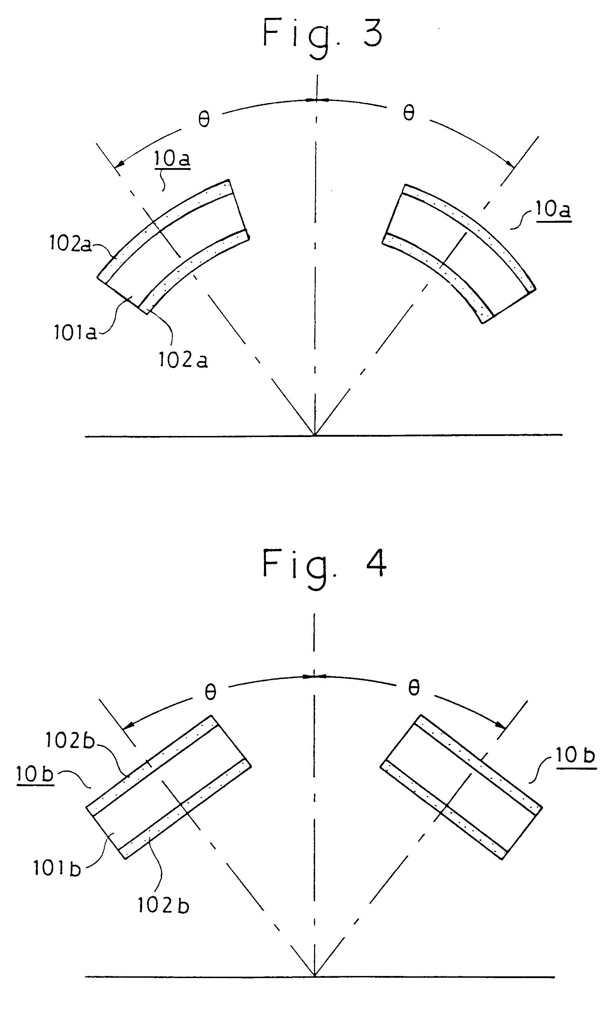

To remove the foregoing drawbacks, ultrasound generator assemblies illustrated in Figs. 3 and 4 were developed.

Referring to Fig. 3, the first one of the ultrasound generator assemblies is defined as a pair of ultrasound generators (receivers) 10a each of which is a piezoelectric body e.g. a zinc oxide film 101a sandwiched by a couple of electrodes 102a and each of which has a concave surface facing an objective from which an ultrasound is emitted toward (or received from) the objective.

Referring to Fig. 4, the second one of the ultrasound generator assemblies is defined as a pair of ultrasound generators (receivers) 10b each of which is a piezoelectric body e.g. a zinc oxide film 101b sandwiched by a couple of electrodes 102b and each of which has a flat surface from which an ultrasound is emitted toward (or received from) the objective and each of which is inclined by ϑ with respect to the direction perpendicular to the surface of an objective.

These ultrasound generator assemblies are employable for converting a high frequency electric signal to an ultrasound and for emitting the same toward the surface of an objective and for receiving the ultrasound reflected on the surface of the objective and for converting the ultrasound to a high frequency electric signal.

Each of the foregoing ultrasound generator assemblies can be employed for an ultrasonic acoustic microscope. Therefore, referring to drawings, an ultrasonic acoustic microscope employing the foregoing second one of the ultrasound generator assemblies or the ultrasound generator assembly having two ultrasound generators each of which has a flat surface for emitting or receiving an ultrasound will be described below.

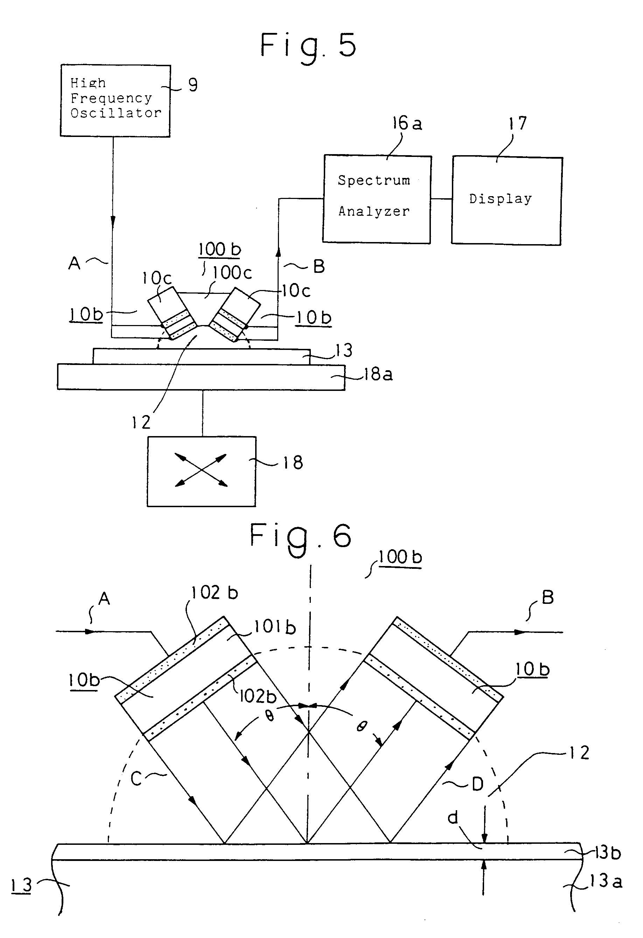

Referring to Fig. 5, a high frequency oscillator 9 supplies a high frequency electric signal A towards an ultrasound generator assembly 100b which has a pair of ultrasound generators 10b each of which has a flat surface for emitting (receiving) an ultrasound and is supported by a supporter 10c made of e.g. a resin body. Further, the ultrasound generators 10b attached by the supporters 10c are bridged with each other by an ultrasound generator holder 100c. An ultrasound emitted by the ultrasound generator 10b travels in an ultrasound transmission liquid (as a matter of fact, water) 12 towards a specimen 13 supported by a table 18a driven by an X-Y table drive 18. Since this ultrasonic acoustic microscope does not use a delay element, the function of the ultrasound transmission liquid 12 is limited to that of a pass through which an ultrasound is transmitted. In this sense, any material which allows an ultrasound to pass through can be employed as a material for an ultrasound transmission liquid. The ultrasound reflected on the specimen 13 is received by the ultrasound receiver (generator) 10b which generates an electric signal B which is applied to a spectrum analyzer 16a. A display means 17 or the like can be additionally employed for enabling a visual inspection to be implemented on a screen.

Referring to drawings including Figs. 5, 6 and 7, an example of the procedure for measuring the thickness of a layer plated on a substrate will be described below. Each of the ultrasound generators 10b each of which is a piezoelectric body e.g. a zinc oxide plate 101b sandwiched by a pair of electrodes 102b and each of which has a flat surface is inclined by an angle ϑ with respect to the direction perpendicular to the surface of an objective 13 which is a piled body having a layer 13b plated on a substrate 13a. An electric impulse signal A is applied to the ultrasound generator 10b of an ultrasound generator assembly 100b which is soaked in an ultrasound transmission liquid 12 which actually is water. An ultrasound C emitted from the ultrasound generator 10b and travelling in the ultrasound transmission liquid (water) 12 is reflected on the surface of or inside the layer 13b of which the thickness is "d" and which is plated on a substrate 13a. The reflected ultrasound D contains plural ultrasound waves having frequencies different from one another. The reflected ultrasound D is received by an ultrasound receiver (generator) 10b and is converted to another electric signal B containing plural components having various frequencies. A frequency analysis procedure is applied to the electric signal B for determining the intensity or amplitude of each signal component of which the frequency is different from one another, for resultantly determining the distribution of the intensity of the signal components with respect to the frequency thereof.

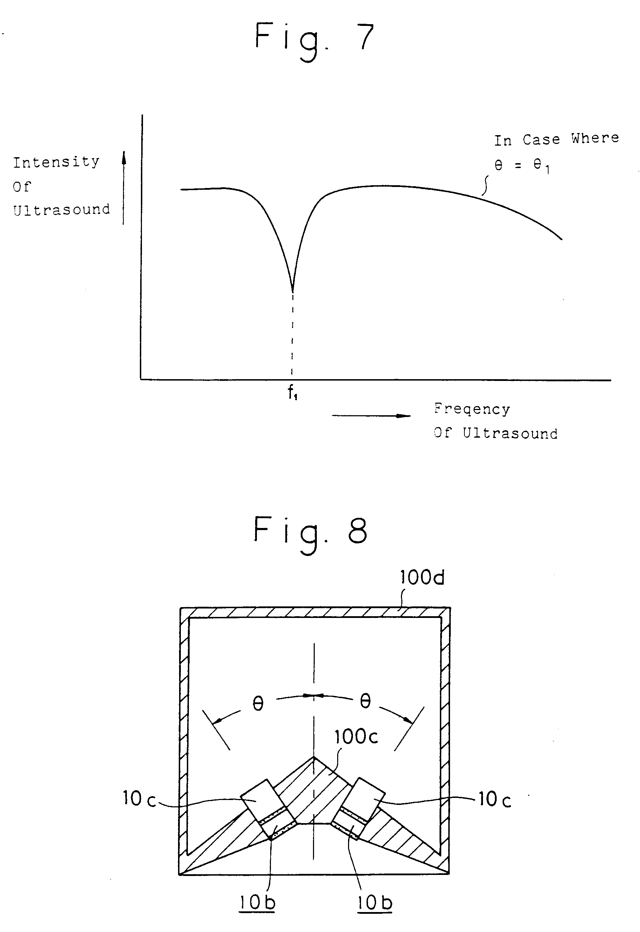

Provided an optimum angle ϑ₁ is selected as the incident angle ϑ, a dip frequency f₁ at which the intensity of the reflected ultrasound turns out to be minimum is observed as is illustrated in Fig. 7. Referring to Fig. 7, acceptable is a formula :$\text{f₁ x d = C}$ wherein :
f₁ is a dip frequency,
d is the thickness of a layer, and
C is a constant determined depending on the physical characteristics of the materials including the substrate, the layer and an ultrasound transmission liquid and depending on the dip angle ϑ₁.

Based on this function, the thickness "d" of a layer 13b is allowed to be determined.

Based on the same principle, inspection of the magnitude of adhesion of a layer (not shown) plated on a substrate (not shown) is allowable.

In addition, the foregoing ultrasonic acoustic microscope can be employed for various purposes for measurement of the physical characteristics of a material.

### DRAWBACKS TO BE REMOVED BY THIS INVENTION

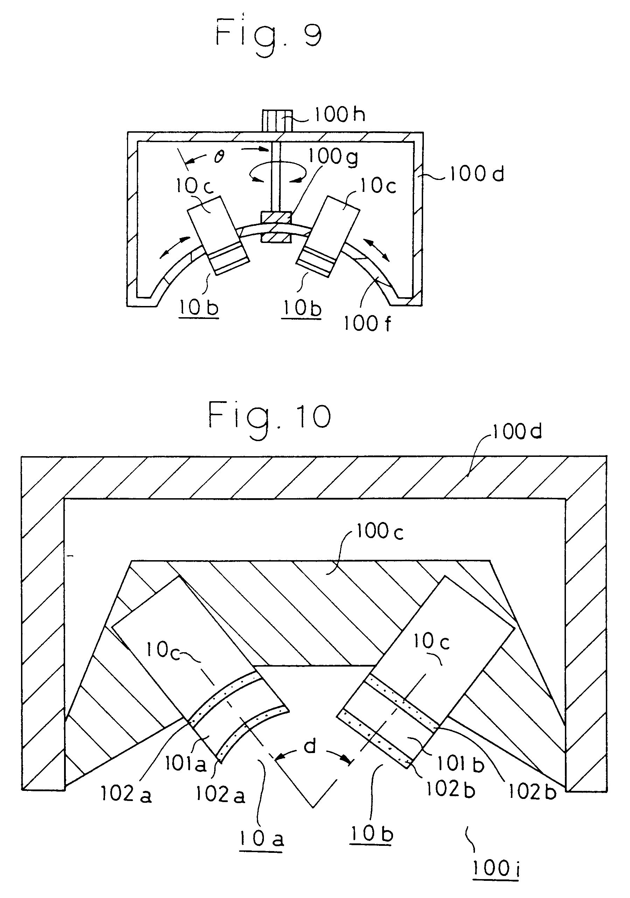

An ultrasound generator assembly having a structure illustrated in Fig. 4 is involved with drawbacks tabulated below.
1. No resolving power is allowable. In other words, this ultrasound generator assembly emits an ultrasound of which the wave front is not curved or of which the travelling direction is parallel to each other. Therefore, this ultrasound generator assembly has no function to condense an ultrasound. In cases where the physical characteristics of a specimen is uniform along the surface thereof, there is no problem. In cases where a small area is required to be observed, however, the area of the ultrasound generator (receiver) 10b is required to be small accordingly. Since the area of the ultrasound generator (receiver) 10b can not be made so small, and since an ultrasound generator (receiver) 10b having a small ultrasound emitting (receiving) area generates (receives) a signal small in the intensity, this is a drawback. In other words, a resolving power is preferable.
2. In cases where the ultrasound generator assembly is employed for a process which includes a procedure for determining a dip frequency, the incident angle ϑ must be precisely adjusted to be the optimum angle ϑ₁. Since an ultrasound generator assembly is generally designed as one body combined with an ultrasound generator holder 100c and housed in a case 100d, as is illustrated in Fig. 8, an ultrasound generator assembly is not usually allowed to change the angles between the center lines of the ultrasound generator 10b and receiver 10b. As a result, it is generally difficult for an ultrasound generator assembly to adjust the incident angle ϑ, because a reduction in the incident angle ϑ is inevitably accompanied by an increase in the reflection angle, and vice versa. Therefore, this ultrasound generator assembly is inconvenient for the purposes in which a selection of the incident angle is required.
3. The incident angle ϑ₁ corresponding to a dip frequency f₁ is required to be precisely fit for an ultrasound generator 10b and for an ultrasound receiver 10b, it is inconvenient even if an ultrasound generator assembly is designed to allow adjustment of the incident angles, as is illustrated in Fig. 9 (Each of the ultrasound generator 10b and receiver 10b is supported by an arch shaped worm 100f penetrating each of the supporters 10c, the arch shaped worms 100f being driven by a gear 100g further driven by a screw 100h.), it is not easy for the incident angle ϑ-s of the ultrasound generator 10b and receiver 10b to be accurately adjusted.

An ultrasound generator assembly having a structure illustrated in Fig. 3 is involved with drawbacks described below.

Accuracy is entirely unsatisfactory. Since each of the ultrasound generator 10a and the ultrasound receiver 10a has a concave surface, the ultrasound emitted therefrom is condensed at a point. The ultrasound, however, is a bunch of various ultrasounds of which the incident angles (which are identical to the corresponding reflection angles) are different from one another, it is impossible to restrict the incident angle ϑ to an optimum angle ϑ₁, resultantly devastating the accuracy, when being employed for a procedure in which an optimum angle ϑ₁ is important.

It would be needless to refer to a possibility in which the ultrasound generator 10a constituting the ultrasound generator assembly illustrated in Fig. 3 can be replaced by a combination of a flat surface ultrasound generator 10b and a delay element (not shown but similar to the one illustrated in Fig. 1 as 11) having a concave at the bottom surface thereof.

Secondly, an ultrasonic acoustic microscope employing the ultrasound generator assembly having a structure illustrated in Fig. 4 can not be free from the disadvantages specific to the ultrasound generator assembly having a structure illustrated in Fig. 4.

Similarly, an ultrasonic acoustic microscope employing the ultrasound generator assembly having a structure illustrated in Fig. 3 can not be free from the disadvantages specific to the ultrasound generator assembly having a structure illustrated in Fig. 3. The situation remains unchanged, even if the ultrasound generator 10a constituting the ultrasound generator assembly illustrated in Fig. 3 is replaced by a combination of a flat surface ultrasound generator 10b and a delay element (which is similar to the one illustrated in Fig. 1 as 11) having a concave surface at the bottom thereof. The only difference is limited to the physical significance of an ultrasound transmission liquid, which becomes essential for an ultrasound generator assembly consisting of two flat ultrasound generators accompanied by delay elements, for acquisition of the resolving power.

Accordingly, the first object of this invention is to provide an ultrasound generator assembly which is accurate, which has a resolving power, and which has versatility for selection or adjustment of the inclination of each ultrasound generator and each ultrasound receiver with respect to an objective and which is simple in employment thereof.

The second object of this invention is to provide an ultrasonic acoustic microscope which is accurate, which has a resolving power, and which has versatility for selection or adjustment of the inclination of each ultrasound generator and each ultrasound receiver with respect to an objective and which is simple in employment thereof.

### SUMMARY OF THE INVENTION

Firstly, either of the two independent ultrasound generator assemblies described below is allowed to achieve the first object of this invention.

A first ultrasound generator assembly in accordance with this invention comprises
a first ultrasonic generator (10a) comprising a curved plate of a piezoelectric body (101a) sandwiched by a pair of electrodes (102a) having a concave surface from which an ultrasonic signal is emitted, and a second ultrasonic generator (10b) having a flat surface from which an ultrasonic signal is emitted,
**characterized in that**
said second ultrasonic generator (10b) having a flat surface has a flat plate of a piezoelectric body (101b) sandwiched by a pair of electrodes (102b),
an ultrasonic generator holder (100c) is provided for supporting said ultrasonic generators (10a) and (10b), maintaining a fixed angle (α) therebetween, and
said ultrasonic generators are arranged in the ultrasonic generator holder such that they are on the same side of a specimen through which said emitted ultrasonic signal flows.

The concave surface is allowed to be a spherical concave to make a point focus or a cylindrical concave to make a line focus.

Either of the foregoing ultrasound generators 10a and 10b is allowed to be employed either for generating or for receiving an ultrasound.

Since each of the ultrasound generator 10a and the ultrasound generator 10b is small and thin, supporters 10c are actually employed for supporting the ultrasound generators 10a and 10b.

A second ultrasound generator assembly in accordance with this invention comprises
a first ultrasonic lens (101c) comprising a first ultrasonic generator (10b) comprising a flat plate of a piezoelectric body (101b) sandwiched by a pair of electrodes (102b) and a delay element (11c) having a concave surface from which an ultrasonic signal is emitted and being attached to said first ultrasonic generator (10b), and
a second ultrasonic lens (101d) comprising a second ultrasonic generator (10b) comprising a flat plate of a piezoelectric body (101b) sandwiched by a pair of electrodes (102b) and a delay element (11d) having a flat surface from which an ultrasonic signal is emitted and being attached to said second ultrasonic generator (10b), and
an ultrasonic generator holder (100c) for supporting said ultrasonic lenses (101c and 101d), maintaining a fixed angle (α) therebetween,
said ultrasonic generators being arranged in the ultrasonic generator holder such that they are on the same side of a specimen through which said emitted ultrasonic signal flows.

The concave surface is allowed to be a spherical concave to make a point focus or a cylindrical concave to make a line focus.

Either of the foregoing ultrasound lenses 101c and 101d is allowed to be employed either for generating or for receiving an ultrasound.

Secondly, either of the two independent ultrasonic acoustic microscopes described be low is allowed to achieve the second object of this invention.

A first ultrasonic acoustic microscope in accordance with this invention comprises
a high frequency oscillator (9),
an ultrasonic generator assembly (100i) further comprising a first ultrasonic generator (10a) comprising a curved plate of a piezoelectric body (101a) sandwiched by a pair of electrodes (102a) having a concave surface from which an ultrasonic signal is emitted, and a second ultrasonic generator (10b) having a flat surface from which an ultrasonic signal is emitted,
an X-Y table (18) having a table (18a) on which a specimen (13) is placed, and
a display means (17),
**characterized in that**
said flat plate of said second ultrasonic generator (10b) has a flat plate of a piezoelectric body (101b) sandwiched by a pair of electrodes (102b),
an ultrasonic generator holder (100c) is provided for supporting said ultrasonic generators (10a) and (10b), maintaining a fixed angle (α) therebetween,
a spectrum analyzer means (16a) is provided, and
said ultrasonic generators are arranged in the ultrasonic generator holder such that they are on the same side of a specimen through which said emitted ultrasonic signal flows.

Either of the foregoing ultrasound generators 10a and 10b is allowed to be employed either for generating or for receiving an ultrasound.

As was described above for the foregoing first ultrasound generator assembly 100i in accordance with this invention, the concave is allowed to be a spherical concave or a cylindrical concave for respectively focusing on a point or along a line.

Since each of the ultrasound generator 10a and the ultrasound generator 10b is small and thin, supporters 10c are actually employed for supporting the ultrasound generators 10a and 10b.

A second ultrasonic acoustic microscope in accordance with this invention comprises
a high frequency oscillator (9),
an ultrasonic generator assembly (100j),
an X-Y table (18) having a table (18a) on which a specimen is placed, and
a display means (17),
**characterized by**
a first ultrasonic lens (101c) comprising a first ultrasonic generator (10b) having a flat plate of a piezoelectric body (101b) sandwiched by a pair of electrodes (102b) and a delay element (11c) having a concave surface from which an ultrasonic signal is emitted and being attached to said first ultrasonic generator (10b), and a second ultrasonic lens (101d) comprising a second ultrasonic generator (10b) having a flat plate of a piezoelectric body (101b) sandwiched by a pair of electrodes (102b) and a delay element (11d) having a flat surface from which an ultrasonic signal is emitted and being attached to said second ultrasonic generator (10b),
an ultrasonic generator holder (100c) for supporting said ultrasonic lenses (101c and 101d), maintaining a fixed angle (α) therebetween, and
a spectrum analyzer means (16b),
said ultrasonic generators being arranged in the ultrasonic generator holder such that they are on the same side of a specimen through which said emitted ultrasonic signal flows.

As was described above for the foregoing second ultrasound generator assembly 100j in accordance with this invention, the concave is allowed to be a spherical concave or a cylindrical concave for respectively focusing on a point or along a line.

Either of the foregoing ultrasound lenses 101c and 101d is allowed to be employed either for generating or for receiving an ultrasound.

### BRIEF DESCRIPTION OF THE DRAWINGS

A more detailed description will be presented below for ultrasound generator assemblies in accordance with this invention and for ultrasonic acoustic microscopes in accordance with this invention, referring to the drawings tabulated below :
Fig. 1 is a schematic drawing of an ultrasonic acoustic microscope available in the prior art,
Fig. 2 is a graph illustrating a result of "the V (Z) curve method",
Fig. 3 is a drawing illustrating a schematic arrangement of ultrasound generators consisting of an ultrasound generator assembly having a concave shaped ultrasound emitting surface, available in the prior art,
Fig. 4 is a drawing illustrating a schematic arrangement of ultrasound generators consisting of an ultrasound generator assembly having a flat shaped ultrasound emitting surface, available in the prior art,
Fig. 5 is a schematic drawing of an ultrasonic acoustic microscope having an ultrasound generator assembly consisting of ultrasound generators each of which has a flat shaped ultrasound emitting surface available in the prior art,
Fig. 6 is a schematic drawing explaining the function of an ultrasound generator having a flat shaped ultrasound emitting surface available in the prior art,
Fig. 7 is a graph explaining a dip frequency corrsponding to an optimum incident angle,
Fig. 8 is an overall cross-sectional view of an ultrasound generator assembly consisting of ultrasound generators each of which has a flat shaped ultrasound emitting surface available in the prior art,
Fig. 9 is an overall cross-sectional view of an ultrasound generator assembly having a mechanism for adjusting the incident angle available in the prior art,
Fig. 10 is an overall cross-sectional view of an ultrasound generator assembly in accordance with the first embodiment of ultrasound assemblies of this invention,
Fig. 11, 12 and 13 are schematic drawings explaining the function of an ultrasound generator assembly in accordance with the first embodiment of ultrasound generator assemblies of this invention (the case in which an ultrasound generator having a concave is employed for emitting an ultrasound),
Figs. 14, 15 and 16 are schematic drawings explaining the function of an ultrasound generator assembly in accordance with the first embodiment of ultrasound generator assemblies of this invention (the case in which a flat surface ultrasound generator is employed for emitting an ultrasound),
Fig. 17 is a schematic drawing explaining one of the results of the ultrasound generator in accordance with this invention,
Fig. 18 is an overall cross-sectional view of an ultrasound generator assembly in accordance with the second embodiment of ultrasound generator assemblies of this invention,
Fig. 19 is a schematic drawing of an ultrasonic acoustic microscope in accordance with the first embodiment of ultrasonic acoustic microscopes of this invention,
Fig. 20 is a schematic drawing of an ultrasonic acoustic microscope in accordance with the second embodiment of ultrasonic acoustic microscopes of this invention,
Fig. 21 is a graph illustrating the relations between the intensity of an ultrasound and the corresponding incident angle, measured using a frequency as a parameter,
Fig. 22 is a graph illustrating the relations between the intensity of an ultrasound and the corresponding dip frequency or illustrating the distribution of the intensity of an ultrasound with respect to frequency, measured an incident angle as a parameter, and
Fig. 23 is a dispersion curve illustrated in terms of the relations between the incident angle and the corresponding frequency of an ultrasound.

### DETAILED DESCRIPTION OF PREFERRED EMBODIMENTS

### ULTRASOUND GENERATOR ASSEMBLY

### FIRST EMBODIMENT

An ultrasound generator assembly in accordance with this embodiment employs supporters 10c for supporting ultrasound generators each of which is not accompanied by a delay element.

Referring to Fig. 10, an ultrasound generator 10a is identical to the one illustrated in Fig. 3. In other words, the ultrasound generator 10a is a curved plate of a piezoelectric body 101a e.g. a zinc oxide curved film having a concave surface on one side, the curved plate 101a being sandwiched by a pair of electrodes e.g. gold films 102a. One of the electrodes 102a located on the side opposite to the ultrasound emitting surface is attached by a supporter 10c made of a resin or the like. An ultrasound generator 10b is identical to the one illustrated in Fig. 4. In other words, the ultrasound generator 10b is a flat plate of a piezoelectric body 101b e.g. a zinc oxide flat film having a flat surface sandwiched by a pair of electrodes e.g. gold films 102b. One of the electrodes 102b located on the side opposite to the ultrasound emitting surface is attached by a supporter 10c made of a resin or the like. The ultrasound generators 10a and 10b are connected with each other by an ultrasound generator holder 100c. When the concave is a spherical concave, the emitted ultrasound focuses on a point, and when the concave is a cylindrical concave, the emitted ultrasound focuses along a line.

The foregoing ultrasound generator 10a or 10b can be produced by employing an evaporation process or a spattering process for depositing a gold film 102a or 102b, a zinc oxide film 101a or 101b and a gold film 102a or 102b, in this order, on a supporter 10c made of a resin or the like having a flat surface or a concave surface respectively.

A pair of the foregoing ultrasound generators 10a and 10b is held by an ultrasound generator holder 100c, maintaining an angle α between the center lines of the ultrasound generators 10a and 10b, before being further housed in a case 100d.

In the foregoing manner, an ultrasound generator assembly 100i in accordance with the first embodiment of this invention is produced.

It is realistic that some means e.g. a screw or the like is arranged around the external surface of the case 100d of the ultrasound generator assembly 100i for fitting the same to the body tube of an ultrasonic acoustic microscope.

Since each of the ultrasound generators 10a and 10b of this ultrasound generator assembly 100i is not accompanied by a delay element, the focusing point 11b is identical to the center of curvature of the concave of the ultrasound generator 10a.

It would be needless to refer to an ultrasound transmission liquid which is usually employed with this ultrasound generator assembly, because it is actually essential for efficient transmission of an ultrasound.

Function of the ultrasound generator assembly 100i in accordance with this embodiment will be described below.

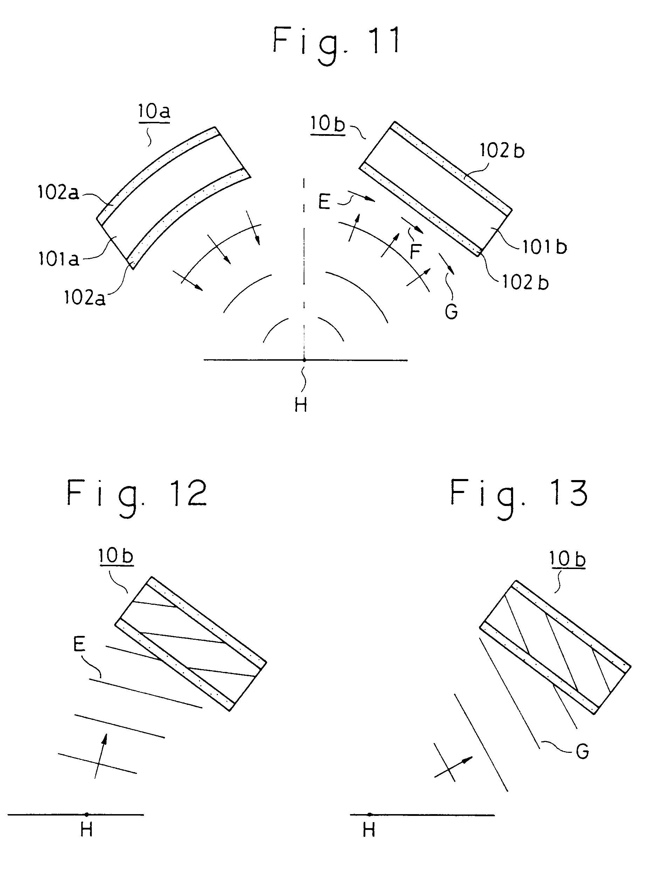

Referring to Fig. 11, since the ultrasound generator 10a emits an ultrasound from a concave shaped surface, as is illustrated by arrows, the wave front of the ultrasound is curved, as is illustrated by a part of a circle. This can be interpreted that the ultrasound receiver 10b receives a combination of ultrasounds E, F and G, each of which has a wave front whose direction is different from one another but each of which originates from a single point H. Referring to Figs. 12 and 13, the reflected ultrasound components E and G can hardly be effective to generate a corresponding electric signal, the ultrasound receiver 10b actually receives an ultrasound component F alone which has a wave front parallel to the surface of the ultrasound generator 10b, out of the various ultrasounds originated from the point H. Incidentally, however, the components E and G furnish energy to some extent for oscillating the ultrasound generator 10b. Therefore, the intensity of the ultrasound generated by the ultrasound generator 10b turns out to be much larger than the intensity of the ultrasound generated by an ultrasound generator assembly consisting of two flat ultrasound generators each of which has a small area for emitting an ultrasound or by an ultrasound generator assembly consisting of two flat ultrasound generators illustrated in Fig. 4 but having small areas for emitting an ultrasound. Therefore, the electric signal generated by the ultrasound generator 10b is a signal which is strong in the magnitude and faithfully represents the physical characteristics particularly the elastic characteristics of the material of the specimen at the point H which is small in the area.

This means that the ultrasound generator assembly 100i is allowed to have a resolving power in the sense that the incident ultrasound is gathered at a point which is the focus of the ultrasound generator which has a concave surface 10a, and that the ultrasound generator assembly 100i is allowed to have an excellent magnitude of accuracy in the sense that the ultrasound receiver which has a flat surface 10b receives only the ultrasound reflected with the optimum reflection angle.

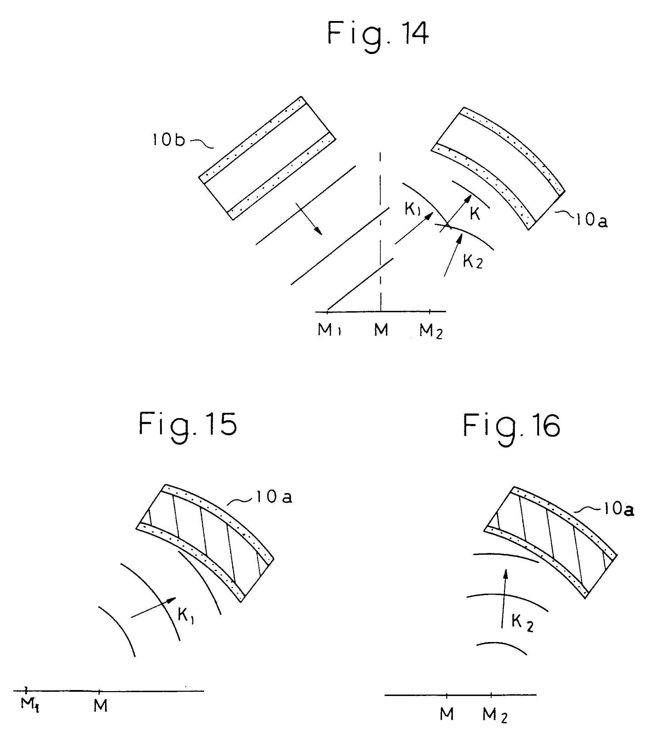

Also in the case where the flat shaped one 10b is employed as an ultrasound generator and the concave shaped one 10a is employed as an ultrasound receiver, the similar effect is observed, as is clear from Figs. 14, 15 and 16.

Referring to Fig. 14, since the ultrasound generator 10b emits an ultrasound from a flat shaped surface in the direction illustrated by an arrow, as is illustrated by plural straight lines illustrated in parallel with each other, the ultrasound collides not only at a point M but also at various points including M₁ and M₂. Therefore, the ultrasound receiver 10a receives ultrasounds from various directions including K, K₁, K₂, and the like not only from the point M but also from points M₁, M₂ and the like. Referring to Figs. 15 and 16, the ultrasounds K₁ and K₂ originated respectively from the point M₁ or M₂ can hardly be effective to generate a corresponding electric signal, the ultrasound receiver 10a actually receives an ultrasound K originating from the point M. It is noted, however, that the concave shaped ultrasound receiver 10a receives the ultrasound K having a wide spacial angle corresponding to the aperture angle of the ultrasound receiver 10a. This means that the ultrasound generator assembly 100i is allowed, also in the case where the flat shaped one 10b is employed as an ultrasound generator and the concave shaped one 10a is employed as an ultrasound receiver as is illustrated in Fig. 14, the similar effects as were described above referring to Figs. 11 through 13. In other words, the ultrasound generator assembly 100i is allowed to sense the physical characteristics particularly the elastic characteristics of a small area of a specimen with high accuracy, regardless the arrangement of the flat one and the concave one is selected in either way.

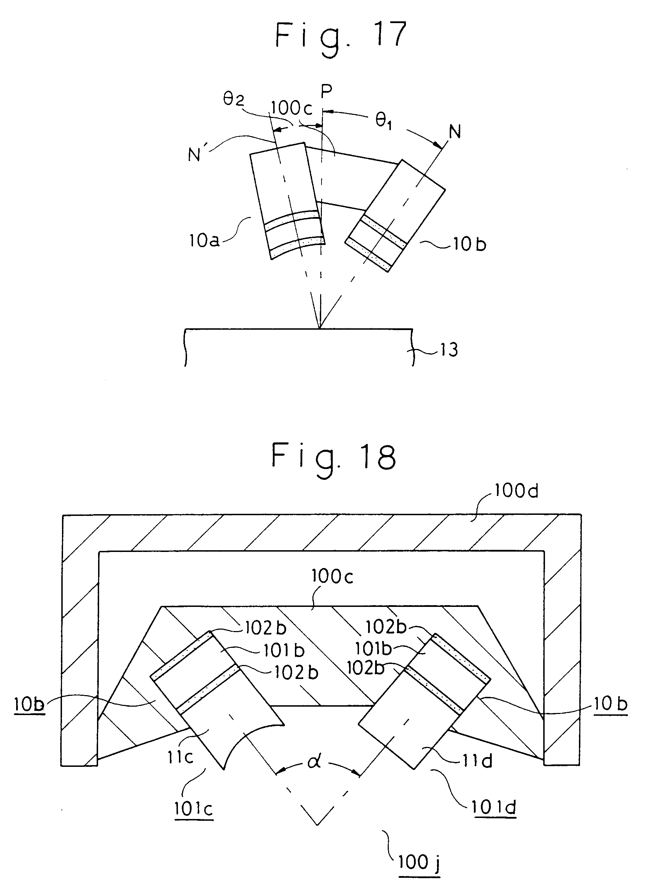

The above description means that the ultrasound generator assembly 100i can be arranged at its optimum incident angle ϑ₁ by a simplified procedure. Referring to Fig. 17, the ultrasound generator assembly 100i can be arranged at its optimum incident angle ϑ₁ by adjusting only the angle between the direction N perpendicular to the flat surface of the ultrasound generator 10b having a flat surface and the direction P perpendicular to the surface of an objective 13 This means that no attention is required to pay to the angle ϑ₂ between the center line N′ of the concave shaped ultrasound generator 10a and the direction P perpendicular to the surface of an objective 13, resultantly realizing versatility for selection or adjustment of the inclination of the ultrasound generator assembly with respect to an objective and to simplify the procedure for the employment of the ultrasound generator assembly.

### SECOND EMBODIMENT

An ultrasound generator assembly in accordance with this embodiment employs delay elements for producing a resolving power or for focusing an ultrasound. Referring to Fig. 18, an ultrasound generator 10b is identical to the one illustrated in Fig. 4. In other words, the ultrasound generator 10b is a flat plate of a piezoelectric body e.g. a zinc oxide film 101b having a flat surface sandwiched by a pair of electrodes e.g. gold films 102b. One of the electrodes 102b is attached by a delay element 11c or 11d. The one of the ultrasound generator assemblies 10b attached by a delay element 11c having a concave on the surface thereof from which an ultrasound is emitted is defined as an ultrasound condensing lens 101c, which is a combination of a flat surface ultrasound generator 10b and a concave surface delay element 10c. The other of the ultrasound generator assemblies 10b attached by a delay element 11d having a flat surface from which an ultrasound is emitted, is defined as an ultrasound non-condensing lens 101d, which is a combination of a flat surface ultrasound generator 10b and a flat surface delay element 10d. The ultrasound condensing lens 101c and the ultrasound non-condensing lens 101d are connected with each other by an ultrasound generator holder 100c. When the concave is a spherical concave, the emitted ultrasound focuses on a point, and when the concave is a cylindrical concave, the emitted ultrasound focuses along a line.

The ultrasound condensing lens 101c can be produced by employing an evaporation process or a spattering process for depositing a gold film 102b, a zinc oxide film 101b and a gold film 102b, in this order on a delay element 11c having a concave on the surface thereof from which an ultrasound is emitted made of fused quartz etc. The ultrasound non-condensing lens 101d can be produced by employing an evaporation process or a spattering process for depositing a gold film 102b, a zinc oxide film 101b and a gold film 102b, in this order on a delay element 11d having a flat surface from which an ultrasound is emitted, the delay element 11d being made of fused quartz etc.

The ultrasound condensing lens 101c and the ultrasound non-condensing lens 101d are held by an ultrasound generator holder 100c maintaining the angle α between the center lines of the ultrasound condensing lens 101c and the ultrasound non-condensing lens 101d, before being further housed in a case 100d.

In the foregoing manner, an ultrasound generator assembly 100j in accordance with the second embodiment of this invention is produced.

The function of ultrasound generator assembly 100j is identical to that of the ultrasound generator assembly 100i described above, excepting that the ultrasound condensing lens 101c having a delay element 11c having a concave on the surface from which an ultrasound is emitted, has an effect to focus or condense an ultrasound due to the difference in the velocity thereof in a delay element and in an ultrasound transmission liquid and that the focusing point 11b is remote from the center of curvature of the concave of the delay element 11c towards the direction opposite to the delay element 11c.

Further, an ultrasound transmission liquid (not shown) is essential, because the resolving power is caused by the difference in the velocity of an ultrasound in the delay element 11c and in the velocity of an ultrasound in the ultrasound transmission liquid (not shown).

As is in the case of the ultrasound generator assembly 100i in accordance with the first embodiment of this invention, the ultrasound generator assembly 100j in accordance with the second embodiment of this invention is allowed to sense the physical characteristics particularly the elastic characteristics of a small area of a specimen with high accuracy, regardless the arrangement of the flat one (a delay element in this embodiment) and the concave one (a delay element in this embodiment) is selected in either way. Further, as is in the case of the ultrasound generator assembly 100i in accordance with the first embodiment of this invention, the ultrasound generator assembly 100j in accordance with the second embodiment of this invention is allowed versatility for selection or adjustment of the inclination of the ultrasound generator assembly with respect to an objective and to simplify the procedure for the employment of the ultrasound generator assembly.

### ULTRASONIC ACOUSTIC MICROSCOPE

### FIRST EMBODIMENT

An ultrasonic acoustic microscope in accordance with this embodiment employs an ultrasound generator assembly 100i in accordance with the first embodiment of an ultrasound generator assembly of this invention.

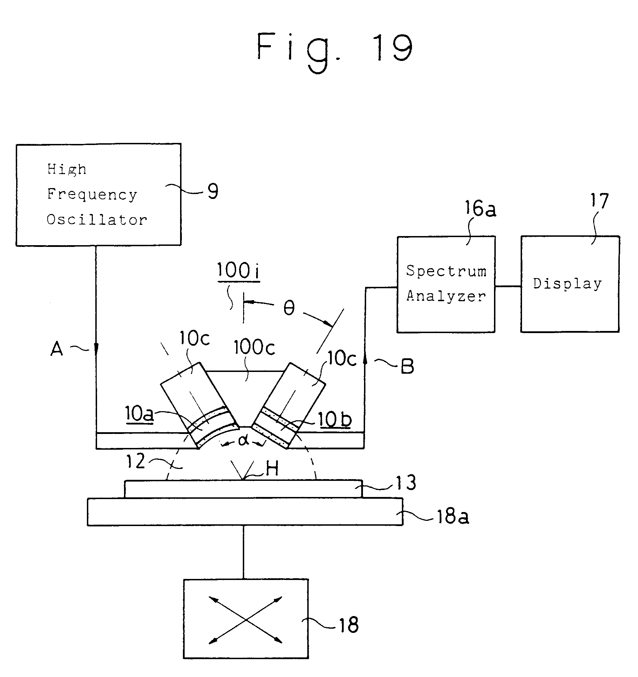

Referring to Fig. 19, a high frequency oscillator 9 supplies a high frequency electric signal having a frequency selected from the frequency range of 10 through 1,000 MHz towards one of the ultrasound generator assemblies 10a and 10b. Each of the ultrasound generator assemblies 10a and 10b is supported by a supporter 10c made of a resin or the like, and both ultrasound generator assemblies 10a and 10b are held by an ultrasound generator holder 100c maintaining the angle α between the center lines of the ultrasound generator 10a having a concave on the surface from which an ultrasound is emitted and the ultrasound generator 10b having a flat surface from which an ultrasound is emitted. Although the foregoing combination of the ultrasound generators 10a and 10b are usually housed in the case 100d as is illustrated in Fig. 10, this is not illustrated in Fig. 19.

A specimen 13 is placed on a table 18a driven by an X-Y table drive 18, maintaining the ultrasound transmission liquid 12 (actually water) between the ultrasound generators 10a and 10b and the specimen 13.

Being applied a high frequency electric signal usually a burst signal A, the ultrasound generator 10a emitts an ultrasound to be focused on a point H which is to be determined as the crosspoint of the direction perpendicular to the surface of a specimen 13 and of the direction perpendicular to the surface of the ultrasound generator 10b having a flat surface for emitting or receiving an ultrasound.

The ultrasound receiver 10b having a flat surface receives an ultrasound reflected at the point H and generates an electric signal B which contains plural signals of which the frequency is different from one another. This signal B containing a plurality of wide band signals is applied to a spectrum analyzer 16a for being applied a frequency spectrum analysis process or for being determined the intensity of each signal of which the frequency spread or spectrum in a wide frequency range.

Provided the angle ϑ between the direction perpendicular to the surface of a specimen 13 and the direction perpendicular to the surface of the ultrasound generator 10b is the optimum angle ϑ₁, a dip frequency f₁ can be obtained, as was described above, referring to Fig. 7.

A display means 17 is employed for various purposes including the purpose for displaying a graph similar to that which is illustrated in Fig. 7.

As was described above, the function of an ultrasound generator assembly 100i remains unchanged, even if the flat surface ultrasound generator 10b is employed as an ultrasound generator. Therefore, an ultrasonic acoustic microscope 100i provided a combination of a concave surface ultrasound generator and a flat surface ultrasound generator allows either ultrasound generator assembly 10a or 10b to be employed either as a means for generating an ultrasound or as a means for receiving an ultrasound.

In conclusion, an ultrasonic acoustic microscope in accordance with the first embodiment of this invention is allowed to be excellent in accuracy and to have the resolving power. Further, it is given versatility for selection or adjustment of the inclination of each ultrasound generator and each ultrasound receiver with respect to an objective and to simplify the procedure for employment thereof.

### SECOND EMBODIMENT

An ultrasonic acoustic microscope in accordance with this embodiment employs an ultrasound generator assembly 100j in accordance with the second embodiment of an ultrasound generator assembly of this invention.

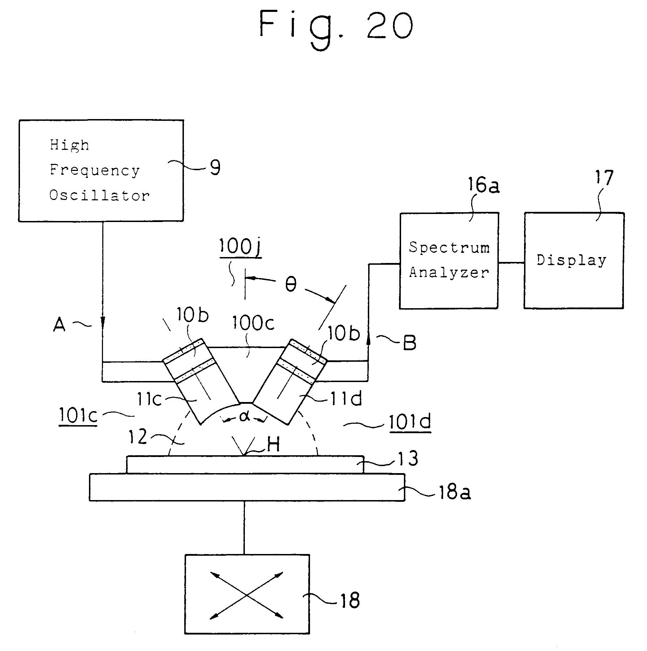

Referring to Figs. 19 and 20, the difference between the ultrasonic acoustic microscope in accordance with the first embodiment and the ultrasonic acoustic microscope in accordance with the second embodiment is limited to the ultrasound generator assembly employed. Since there is no remarkable functional difference between the ultrasound generator assembly 100i employed for the first embodiment and the ultrasound generator assembly 100j employed for the second embodiment, there is no remarkable functional difference between the ultrasonic acoustic microscope in accordance with the first embodiment and the ultrasonic acoustic microscope in accordance with the second embodiment.

Only difference would be the location of the focusing point. In other words, although the focusing point 11b of the ultrasound generator assembly 100i is located on the center of curvature of the concave of the ultrasound generator 10a, as is illustrated in Fig. 10, the focusing point 11b of the ultrasound generator assembly 100j is located remote from the center of curvature of the concave of the delay element 11c towards the direction opposite to the delay element 11c, as is illustrated in Fig. 18.

Therefore, an ultrasonic acoustic microscope in accordance with the second embodiment of this invention is allowed to realize various advantages which are allowed for the ultrasonic acoustic microscope in accordance with the first embodiment of this invention.

### METHODS FOR EMPLOYING AN ULTRASONIC ACOUSTIC MICROSCOPE

Exemplary uses of an ultrasonic acoustic microscope in accordance with this invention include the measurement of the phase velocity of an elastic surface wave, the measurement of the dispersion curve of an elastic surface wave, and the measurement of the thickness of a layer constituting a layer structure.

Fundamental steps of each of the foregoing methods will be described below. An ultrasonic acoustic microscope in accordance with this invention is supposed to have a plurality of ultrasound generator assemblies each of which has an angle between the center lines of the two ultrasonic generators different from each other. This is because an incident angle defined as an angle between the center line of the flat surface ultrasound generator and the direction perpendicular to a specimen is required to vary step by step for each measurement.

### A. MEASUREMENT OF THE PHASE VELOCITY OF AN ELASTIC SURFACE WAVE

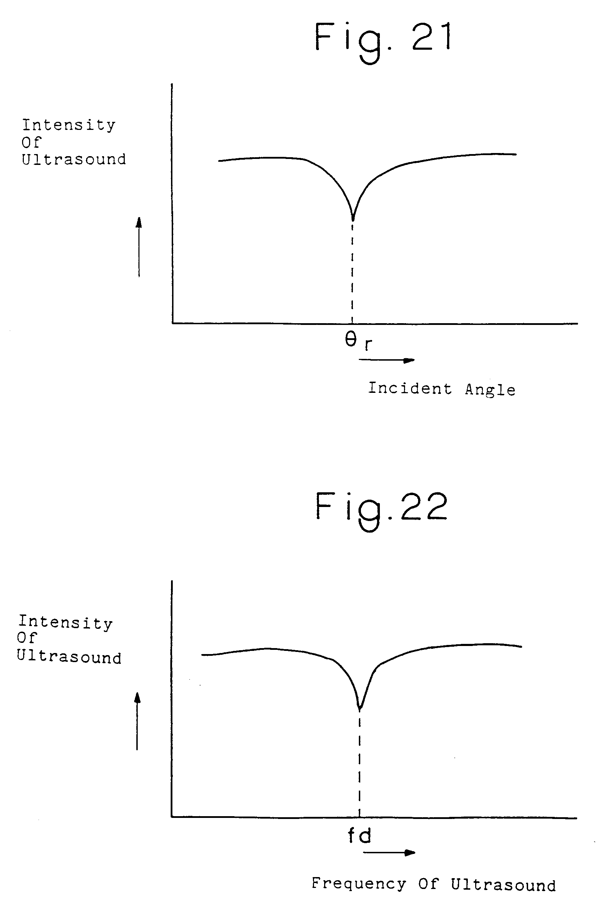

A specimen having no layer structure is selected. Referring to Fig. 19 or 20, the specimen 13 is placed on the table 18a. An incident angle is selected, before the high frequency oscillator 9 is caused to apply a burst signal (an electric impulse signal) A to an ultrasound generator 10a. The ultrasound receiver 10b converts the reflected ultrasound to an electric signal B which is applied to the spectrum analyzer 16a, which outputs a resultant spectrum representing the relations between the intensity of an ultrasound and the corresponding frequency of the ultrasound. The foregoing measurement is repeated, step by step, after the incident angle is varied. After a variety of the foregoing spectrum acquired, the relations between the intensity of an ultrasound and the corresponding incident angle are acquired for an arbitrarily selected frequency, as is illustrated in Fig. 21. The incident angle ϑᵣ at which the intensity of the ultrasound becomes a minimum is read. The phase velocity Vₚ of an elastic surface wave is calculated by a formula : 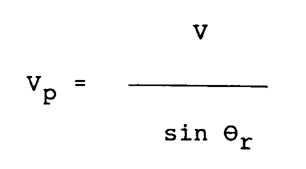
wherein :
V is the velocity of the ultrasound in the ultrasound transmission liquid, and
ϑᵣ is the incident angle determined above.

### B. MEASUREMENT OF THE DISPERSION CURVE OF AN ELASTIC SURFACE WAVE

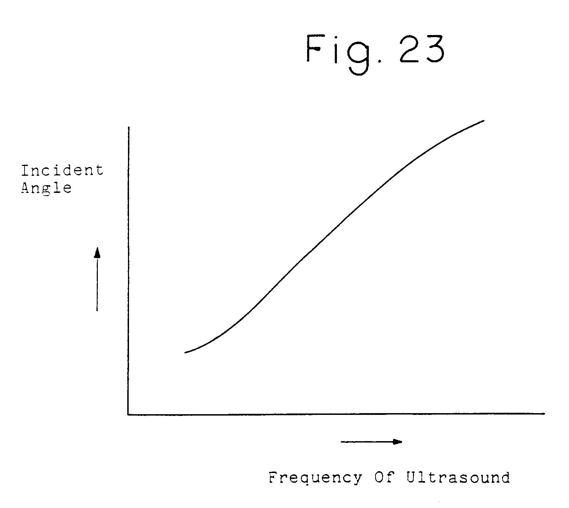

A specimen having a layer structure is selected. Referring to Fig. 19 or 20, the specimen 13 is placed on the table 18a. An incident angle is selected, before the high frequency oscillator 9 is caused to apply a burst signal (an electric impulse signal) A to an ultrasound generator 10a. The ultrasound receiver 10b converts the reflected ultrasound to an electric signal B which is applied to the spectrum analyzer 16a, which outputs a resultant spectrum representing the relations between the intensity of an ultrasound and the corresponding dip frequency f_{d}, as is illustrated in Fig. 22. The foregoing measurement is repeated, step by step, after the incident angle is varied. After a variety of the foregoing spectrum is acquired, the dispersion curve of an elastic surface wave defined as the relations between the incident angle and the corresponding dip frequency f_{d} is acquired. An example of the dispersion curve of an elastic surface wave is illustrated in Fig. 23.

If required, a formula 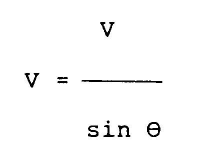
wherein :
V is the velocity of the ultrasound in the ultrasound transmission liquid, and
ϑ is an incident angle can be employed by converting incident angles to velocities.

### C. MEASUREMENT OF THE THICKNESS OF A LAYER CONSTITUTING A LAYER STRUCTURE

A specimen having a layer structure or a piled body is selected. Referring to Fig. 19 or 20, the specimen 13 is placed on the table 18a. An incident angle is selected to be the optimum angle ϑ₁ referred to in the description presented referring to Figs 5, 6 and 7, before the high frequency oscillator 9 is caused to apply a burst signal (an electric impulse signal) A to an ultrasound generator 10a. The ultrasound receiver 10b converts the reflected ultrasound to an electric signal B which is applied to the spectrum analyzer 16a, which outputs a resultant spectrum representing the relations between the intensity of an ultrasound and the corresponding dip frequency f₁. This spectrum is similar to that which is illustrated in Fig. 7.

For calculating the thickness of the layer, employable is a formula :$\text{d = C / f₁}$ wherein :
f₁ is a dip frequency,
d is the thickness of a layer, and
C is a constant determined depending on the physical characteristics of the materials including the substrate, the layer and an ultrasound transmission liquid and depending on the dip angle ϑ₁.

The foregoing description has clarified that this invention successfully provided a plurality of improvements applicable to an ultrasound generator assembly and to an ultrasonic acoustic microscope, for the purpose to increase the accuracy thereof and to give the resolving power thereto and to give versatility for handling thereof resultantly for simplifying the procedure for employment thereof.

Although this invention has been described with reference to specific embodiments, this does not mean to be construed in a limiting sense. Various other embodiments and/or modifications of this invention will become apparent to persons skilled in the art upon reference to the description of this invention. It is therefore contemplated that claims will cover any such embodiments and/or modifications as fall within the true scope of this invention.

## Claims

1. An ultrasonic generator assembly comprising:
a first ultrasonic generator (10a) comprising a curved plate of a piezoelectric body (101a) sandwiched by a pair of electrodes (102a) having a concave surface from which an ultrasonic signal is emitted, and a second ultrasonic generator (10b) having a flat surface from which an ultrasonic signal is emitted,
**characterized in that**
said second ultrasonic generator (10b) having a flat surface has a flat plate of a piezoelectric body (101b) sandwiched by a pair of electrodes (102b),
an ultrasonic generator holder (100c) is provided for supporting said ultrasonic generators (10a) and (10b), maintaining a fixed angle (α) therebetween, and
said ultrasonic generators are arranged in the ultrasonic generator holder such that they are on the same side of a specimen through which said emitted ultrasonic signal flows.

2. An ultrasonic generator assembly in accordance with claim 1, wherein :
said concave surface is spherically concave.

3. An ultrasonic generator assembly in accordance with claim 1, wherein :
said concave surface is cylindrically concave.

4. An ultrasonic generator assembly in accordance with claim 1, wherein :
said first ultrasonic generator (10a) is to generate an ultrasonic signal and said second ultrasonic generator (10b) is to receive the reflected ultrasonic signal.

5. An ultrasonic generator assembly in accordance with claim 1, wherein :
said second ultrasonic generator (10b) is to generate an ultrasonic signal and said first ultrasonic generator (10a) is to receive the reflected ultrasonic signal.

6. An ultrasonic generator assembly in accordance with claim 1, wherein :
each of said ultrasonic generators (10a and 10b) is supported by a supporter (10c).

7. An ultrasonic generator assembly,
**characterized by**
a first ultrasonic lens (101c) comprising a first ultrasonic generator (10b) comprising a flat plate of a piezoelectric body (101b) sandwiched by a pair of electrodes (102b) and a delay element (11c) having a concave surface from which an ultrasonic signal is emitted and being attached to said first ultrasonic generator (10b), and
a second ultrasonic lens (101d) comprising a second ultrasonic generator (10b) comprising a flat plate of a piezoelectric body (101b) sandwiched by a pair of electrodes (102b) and a delay element (11d) having a flat surface from which an ultrasonic signal is emitted and being attached to said second ultrasonic generator (10b), and
an ultrasonic generator holder (100c) for supporting said ultrasonic lenses (101c and 101d), maintaining a fixed angle (α) therebetween,
said ultrasonic generators being arranged in the ultrasonic generator holder such that they are on the same side of a specimen through which said emitted ultrasonic signal flows.

8. An ultrasonic generator assembly in accordance with claim 7, wherein :
said concave surface is spherically concave.

9. An ultrasonic generator assembly in accordance with claim 7, wherein :
said concave surface is cylindrically concave.

10. An ultrasonic generator assembly in accordance with claim 7, wherein :
said first ultrasonic lens (101c) is to generate an ultrasonic signal and said second ultrasonic lens (101d) is to receive the reflected ultrasonic signal.

11. An ultrasonic generator assembly in accordance with claim 7, wherein :
said second ultrasonic lens (101d) is to generate an ultrasonic signal and said first ultrasonic lens (101c) is to receive the reflected ultrasonic signal.

12. An ultrasonic acoustic microscope comprising:
a high frequency oscillator (9),
an ultrasonic generator assembly (100i) further comprising a first ultrasonic generator (10a) comprising a curved plate of a piezoelectric body (101a) sandwiched by a pair of electrodes (102a) having a concave surface from which an ultrasonic signal is emitted, and a second ultrasonic generator (10b) having a flat surface from which an ultrasonic signal is emitted,
an X-Y table (18) having a table (18a) on which a specimen (13) is placed, and
a display means (17),
**characterized in that**
said flat plate of said second ultrasonic generator (10b) has a flat plate of a piezoelectric body (101b) sandwiched by a pair of electrodes (102b),
an ultrasonic generator holder (100c) is provided for supporting said ultrasonic generators (10a) and (10b), maintaining a fixed angle (α) therebetween,
a spectrum analyser means (16a) is provided, and
said ultrasonic generators are arranged in the ultrasonic generator holder such that they are on the same side of a specimen through which said emitted ultrasonic signal flows.

13. An ultrasonic acoustic microscope in accordance with claim 12, wherein :
said concave surface is spherically concave.

14. An ultrasonic acoustic microscope in accordance with claim 12, wherein :
said concave surface is cylindrically concave.

15. An ultrasonic acoustic microscope in accordance with claim 12, wherein :
said first ultrasonic generator (10a) is to generate an ultrasonic signal and said second ultrasonic generator (10b) is to receive an ultrasonic signal.

16. An ultrasonic acoustic microscope in accordance with claim 12, wherein :
said second ultrasonic generator (10b) is to generate an ultrasonic signal and said second ultrasonic generator (10a) is to receive an ultrasonic signal.

17. An ultrasonic acoustic microscope comprising:
a high frequency oscillator (9),
an ultrasonic generator assembly (100j),
an X-Y table (18) having a table (18a) on which a specimen is placed, and
a display means (17),
**characterized by**
a first ultrasonic lens (101c) comprising a first ultrasonic generator (10b) having a flat plate of a piezoelectric body (101b) sandwiched by a pair of electrodes (102b) and a delay element (11c) having a concave surface from which an ultrasonic signal is emitted and being attached to said first ultrasonic generator (10b), and a second ultrasonic lens (101d) comprising a second ultrasonic generator (10b) having a flat plate of a piezoelectric body (101b) sandwiched by a pair of electrodes (102b) and a delay element (11d) having a flat surface from which an ultrasonic signal is emitted and being attached to said second ultrasonic generator (10b),
an ultrasonic generator holder (100c) for supporting said ultrasonic lenses (101c and 101d), maintaining a fixed angle (α) therebetween, and
a spectrum analyzer means (16b),
said ultrasonic generators being arranged in the ultrasonic generator holder such that they are on the same side of a specimen through which said emitted ultrasonic signal flows.

18. An ultrasonic acoustic microscope in accordance with claim 17, wherein :
said concave surface is spherically concave.

19. An ultrasonic acoustic microscope in accordance with claim 17, wherein :
said concave surface is cylindrically concave.

20. An ultrasonic acoustic microscope in accordance with claim 17, wherein :
said first ultrasonic lens (101c) is to generate an ultrasonic signal and said second ultrasonic lens (101d) is to receive an ultrasonic signal.

21. An ultrasonic acoustic microscope in accordance with claim 17, wherein :
said second ultrasonic lens (101d) is to generate an ultrasonic signal and said first ultrasonic lens (101c) is to receive an ultrasonic signal.

## Patentansprüche

1. Ultraschall-Generatorbaugruppe mit:
einem ersten Ultraschallgenerator (10a) mit einer gebogenen Platte eines piezoelektrischen Körpers (101a), der von einem Paar aus Elektroden (102a) schichtweise umschlossen ist, deren ein Ultraschallsignal abgegebende Oberfläche konkav ist, und mit einem zweiten Ultraschallgenerator (10b) mit einer ein Ultraschallsignal abgegebenden gestreckten Oberfläche, **dadurch gekennzeichnet**, daß
der zweite Ultraschallgenerator (10b) mit gestreckter Oberfläche eine gestreckte Platte eines piezoelektrischen Körpers (101b) enthält, die von einem Elektrodenpaar (102b) umschlossen ist,
eine Ultraschall-Generatorhalterung (100c) vorgesehen ist, die die Ultraschallgeneratoren (10a und 10b) in einem festen Winkel (α) zueinander hält, und daß
die Ultraschallgeneratoren in der Ultraschall-Generatorhalterung derart angeordnet sind, daß sie sich auf der gleichen Seite einer Probe befinden, durch die das abgegebene Ultraschallsignal dringt.

2. Ultraschall- Generatorbaugruppe nach Anspruch 1, deren konkave Oberfläche sphärisch- konkav ist.

3. Ultraschall- Generatorbaugruppe nach Anspruch 1, deren konkave Oberfläche zylinderisch- konkav ist.

4. Ultraschall- Generatorbaugruppe nach Anspruch 1, deren erster Ultraschallgenerator (10a) der Erzeugung eines Ultraschallsignals dient und dessen zweiter Ultraschallgenerator (10b) dem Empfang des reflektierten Ultrallschallsignals dient.

5. Ultraschall- Generatorbaugruppe nach Anspruch 1, deren zweiter Ultraschallgenerator (10b) der Erzeugung eines Ultraschallsignals dient, und dessen erster Ultraschallgenerator (10a) dem Empfang des reflektierten Ultraschallsignals dient.

6. Ultraschall- Generatorbaugruppe nach Anspruch 1, deren Ultraschallgeneratoren (10a und 10b) von einem Stempel (10c) gehalten sind.

7. Ultraschall- Generatorbaugruppe,
**gekennzeichnet durch**
eine erste Ultraschallinse (101c) mit einem ersten Ultraschallgenerator (10b) mit einer gestreckten Platte eines piezoelektrischen Körpers (101b), der zwischen einem Paar aus Elektroden (102b) eingeschlossen ist, und durch ein Verzögerungselement (11c) mit einer konkaven Oberfläche, von der ein Ultraschallsignal abgegeben wird, und das an dem ersten Ultraschallgenerator (10b) befestigt ist, und durch
eine zweite Ultraschallinse (101d) mit einem zweiten Ultraschallgenerator (10b) mit einer gestreckten Platte eines piezoelektrischen Körpers (101b), der von einem Paar aus Elektroden (102b) schichtweise umschlossen ist, und durch ein Verzögerungselement (11d), das eine ein Ultraschallsignal abgegebende gestreckte Oberfläche aufweist und das an dem zweiten Ultraschallgenerator (10b) befestigt ist, und durch
eine Ultraschall- Generatorhalterung (10c) zur Halterung der Ultraschallinsen (101c und 101d) in einem festen Winkel (α) zueinander, wobei die Ultraschallgeneratoren in der Ultraschall-Generatorhalterung derart angeordnet sind, daß sie sich auf der gleichen Seite einer Probe befinden, durch die das abgegebene Ultraschallsignal dringt.

8. Ultraschall- Generatorbaugruppe nach Anspruch 7, deren konkave Oberfläche sphärisch- konkav ist.

9. Ultraschall- Generatorbaugruppe nach Anspruch 7, deren konkave Oberfläche zylinderisch- konkav ist.

10. Ultraschall- Generatorbaugruppe nach Anspruch 7, deren erste Ultraschallinse (101c) der Erzeugung eines Ultraschallsignals dient und deren zweite Ultraschallinse (101d) dem Empfang des reflektierten Ultraschallsignals dient.

11. Ultraschall- Generatorbaugruppe nach Anspruch 7, deren zweite Ultraschallinse (101d) der Erzeugung eines Ultraschallsignals dient, und deren erste Ultraschallinse (101c) dem Empfang des reflektieren Ultraschallsignals dient.

12. Akustisches Mikroskop mit Ultraschall, mit:
einem Hochfrequenzoszillator (9),
einer Ultraschall- Generatorbaugruppe (100i), die des weiteren ausgestattet ist mit einem ersten Ultraschallgenerator (10a) mit einer gebogenen Platte eines piezoelektrischen Körpers (101a), der von einem Paar aus Elektroden (102a) schichtweise umgeschlossen ist, die eine konkave Oberfläche aufweisen, von der ein Ultraschallsignal abgegeben wird, und mit einem zweiten Ultraschallgenerator (10b) mit einer gestreckten Oberfläche, von der ein Ultraschallsignal abgegeben wird,
einem X- Y- Tisch (18) mit einem Tisch (18a), auf den eine Probe (13) plaziert wird, und mit
einem Anzeigemittel (17),
**dadurch gekennzeichnet**, daß
die gestreckte Platte des zweiten Ultraschallgenerators (10b) eine gestreckte Platte aus einem piezoelektrischen Körper (101b) ist, die von einem Paar aus Elektroden (102b) schichtweise umgeschlossen ist,
eine Ultraschall-Generatorhalterung (100c) vorgesehen ist, die die Ultraschallgeneratoren (10a und 10b) in einem festen Winkel (α) zueinander hält,
ein Spektrumanalysiermittel (16a) vorgesehen ist, und daß
die Ultraschallgeneratoren in der Ultraschall-Generatorhalterung in der Weise angeordnet sind, daß sie sich auf der gleichen Seite einer Probe befinden, durch die das abgegebene Ultraschallsignal dringt.

13. Akustisches Mikroskop mit Ultraschall nach Anspruch 12, dessen konkave Oberfläche sphärisch- konkav ist.

14. Akustisches Mikroskop mit Ultraschall nach Anspruch 12, dessen konkave Oberfläche zylinderisch- konkav ist.

15. Akustisches Mikroskop mit Ultraschall nach Anspruch 12, dessen erster Ultraschallgenerator (10a) der Erzeugung eines Ultraschallsignals dient, und dessen zweiter Ultraschallgenerator (10b) dem Empfang eines Ultraschallsignals dient.

16. Akustisches Mikroskop mit Ultraschall nach Anspruch 12, dessen zweiter Ultraschallgenerator (10b) der Erzeugung eines Ultraschallsignals dient, und dessen zweiter Ultraschallgenerator (10a) dem Empfang eines Ultraschallsignals dient.

17. Akustisches Mikroskop mit Ultraschall, mit:
einem Hochfrequenzoszillator (9),
einer Ultraschall-Generatorbaugruppe (100j),
einem X- Y- Tisch (18) mit einem Tisch (18a), auf den eine Probe plaziert wird, und mit
einem Anzeigemittel (17),
**gekennzeichnet durch**
eine erste Ultraschallinse (101c) mit einem ersten Ultraschallgenerator (10d) mit einer gestreckten Platte eines piezoelektrischen Körpers (100b), der zwischen einem Paar aus Elektroden (102b) schichtweise eingeschlossen ist, und durch ein Verzögerungselement (11c) mit einer konkaven Oberfläche, von der ein Ultraschallsignal abgegeben wird, und das an dem ersten Ultraschallgenerator (10b) befestigt ist, und durch eine zweite Ultraschallinse (101d) mit einem zweiten Ultraschallgenerator (10b) mit einer gestreckten Platte eines piezoelektrischen Körpers (101b), der zwischen einem Paar aus Elektroden (102b) schichtweise eingeschlossen ist, und durch ein Verzögerungselement (11d), das eine gestreckte Oberfläche aufweist, von der ein Ultraschallsignal abgegeben wird, und das an dem zweiten Ultraschallgenerator (10d) befestigt ist,
eine Ultraschall-Generatorhalterung (100c), die die Ultraschallinsen (101c und 101d) in einem festen Winkel (α) zueinander hält, und durch
ein Spektrum- Analysiermittel (16b),
wobei die Ultraschallgeneratoren in der Ultraschall-Generatorhalterung in der Weise angeordnet sind, daß sie sich auf der gleichen Seite einer Probe befinden, durch die das abgegebene Ultraschallsignal dringt.

18. Akustisches Mikroskop mit Ultraschall nach Anspruch 17, dessen konkave Oberfläche sphärisch-konkav ist.

19. Akustisches Mikroskop mit Ultraschall nach Anspruch 17, dessen konkave Oberfläche zylindrisch-konkav ist.

20. Akustisches Mikroskop mit Ultraschall nach Anspruch 17, dessen erste Ultraschallinse (101c) der Erzeugung eines Ultraschallsignals dient, und dessen zweite Ultraschallinse (101d) dem Empfang eines Ultraschallsignals dient.

21. Akustisches Mikroskop mit Ultraschall nach Anspruch 17, dessen zweite Ultraschallinse (101d) der Erzeugung eines Ultraschallsignals dient, und dessen erste Ultraschallinse (101c) dem Empfang eines Ultraschallsignals dient.

## Revendications

1. Un assemblage de générateurs ultrasonores comprenant :
un premier générateur ultrasonore (10a) comprenant une plaque courbe d'un corps piézoélectrique (101a) intercalée entre une paire d'électrodes (102a) ayant une surface concave à partir de laquelle un signal ultrasonore est émis, et un second générateur ultrasonore (10b) ayant une surface plane à partir de laquelle un signal ultrasonore est émis, caractérisé en ce que
le second générateur ultrasonore (10b) ayant une surface plane comporte une plaque plane d'un corps piézoélectrique (101b) intercalée entre une paire d'électrodes (102b),
un support de générateurs ultrasonores (100c) est incorporé pour supporter les générateurs ultrasonores (10a et 10b), en maintenant un angle fixé (α) entre eux, et
les générateurs ultrasonores sont disposés dans le support de générateurs ultrasonores de manière qu'ils se trouvent du même côté d'un échantillon à travers lequel se propage le signal ultrasonore émis.

2. Un assemblage de générateurs ultrasonores selon la revendication 1, dans lequel :
la surface concave est concave avec une forme sphérique.

3. Un assemblage de générateurs ultrasonores selon la revendication 1, dans lequel :
la surface concave est concave avec une forme cylindrique.

4. Un assemblage de générateurs ultrasonores selon la revendication 1, dans lequel :
le premier générateur ultrasonore (10a) est destiné à générer un signal ultrasonore et le second générateur ultrasonore (10b) est destiné à recevoir le signal ultrasonore réfléchi.

5. Un assemblage de générateurs ultrasonores selon la revendication 1, dans lequel :
le second générateur ultrasonore (10b) est destiné à générer un signal ultrasonore et le premier générateur ultrasonore (10a) est destiné à recevoir le signal ultrasonore réfléchi.

6. Un assemblage de générateurs ultrasonores selon la revendication 1, dans lequel :
chacun des générateurs ultrasonores (10a et 10b) est supporté par un élément de support (10c).

7. Un assemblage de générateurs ultrasonores, caractérisé par
une première lentille ultrasonore (101c) comprenant un premier générateur ultrasonore (10b) qui comprend une plaque plane d'un corps piézoélectrique (101b) intercalée entre une paire d'électrodes (102b), et un élément de retard (11c) ayant une surface concave à partir de laquelle un signal ultrasonore est émis, et qui est fixé sur le premier générateur ultrasonore (10b), et
une seconde lentille ultrasonore (101d) comprenant un second générateur ultrasonore (10b) qui comprend une plaque plane d'un corps piézoélectrique (101b) intercalée entre une paire d'électrodes (102b) et un élément de retard (11d) ayant une surface plane à partir de laquelle un signal ultrasonore est émis, et qui est fixé au second générateur ultrasonore (10b), et
un support de générateurs ultrasonores (100c) destiné à supporter les lentilles ultrasonores (101c et 101d), en maintenant un angle fixé (α) entre elles,
les générateurs ultrasonores étant disposés dans le support de générateurs ultrasonores d'une manière telle qu'ils se trouvent du même côté d'un échantillon à travers lequel se propage le signal ultrasonore émis.

8. Un assemblage de générateurs ultrasonores selon la revendication 7, dans lequel :
la surface concave est concave avec une forme sphérique.

9. Un assemblage de générateurs ultrasonores selon la revendication 7, dans lequel :
la surface concave est concave avec une forme cylindrique.

10. Un assemblage de générateurs ultrasonores selon la revendication 7, dans lequel :
la première lentille ultrasonore (101c) est destinée à générer un signal ultrasonore et la seconde lentille ultrasonore (101d) est destinée à recevoir le signal ultrasonore réfléchi.

11. Un assemblage de générateurs ultrasonores selon la revendication 7, dans lequel :
la seconde lentille ultrasonore (101d) est destinée à générer un signal ultrasonore et la première lentille ultrasonore (101c) est destinée à recevoir le signal ultrasonore réfléchi.

12. Un microscope acoustique à ultrasons comprenant :
un oscillateur de haute fréquence (9),
un assemblage de générateurs ultrasonores (100i) comprenant lui-même un premier générateur ultrasonore (10a) comprenant une plaque courbe d'un corps piézoélectrique (101a) intercalée entre une paire d'électrodes (102a) ayant une surface concave à partir de laquelle un signal ultrasonore est émis, et un second générateur ultrasonore (10b) ayant une surface plane à partir de laquelle un signal ultrasonore est émis,
un plateau X-Y (18) ayant un plateau (18a) sur lequel est placé un échantillon (13), et
des moyens de visualisation (17), caractérisé en ce que
la plaque plane du second générateur ultrasonore (10b) comporte une plaque plane d'un corps piézoélectrique (101b) intercalée entre une paire d'électrodes (102b),
un support de générateurs ultrasonores (100c) est incorporé pour supporter les générateurs ultrasonores (10a et 10b), en maintenant un angle fixé (α) entre eux,
des moyens analyseurs de spectre (16a) sont incorporés, et
les générateurs ultrasonores sont disposés dans le support de générateurs ultrasonores de façon qu'ils se trouvent du même côté d'un échantillon à travers lequel se propage le signal ultrasonore émis.

13. Un microscope acoustique à ultrasons selon la revendication 12, dans lequel
la surface concave est concave avec une forme sphérique.

14. Un microscope acoustique à ultrasons selon la revendication 12, dans lequel : la surface concave est concave avec une forme cylindrique.

15. Un microscope acoustique à ultrasons selon la revendication 12, dans lequel
le premier générateur ultrasonore (10a) est destiné à générer un signal ultrasonore et le second générateur ultrasonore (10b) est destiné à recevoir un signal ultrasonore.

16. Un microscope électronique à ultrasons selon la revendication 12, dans lequel
le second générateur ultrasonore (10b) est destiné à générer un signal ultrasonore et le premier générateur ultrasonore (10a) est destiné à recevoir un signal ultrasonore.

17. Un microscope acoustique à ultrasons comprenant :
un oscillateur de haute fréquence (9),
un assemblage de générateurs ultrasonores (100j),
un plateau X-Y (18) ayant un plateau (18a) sur lequel un échantillon est placé, et
des moyens de visualisation (17), caractérisé par
une première lentille ultrasonore (101c) comprenant un premier générateur ultrasonore (10b) qui comprend une plaque plane d'un corps piézoélectrique (101b) intercalée entre une paire d'électrodes (102b), et un élément de retard (11c) ayant une surface concave à partir de laquelle un signal ultrasonore est émis, et qui est fixé au premier générateur ultrasonore (10b), et une seconde lentille ultrasonore (101d) comprenant un second générateur ultrasonore (10b) ayant une plaque plane d'un corps piézoélectrique (101b) intercalée entre une paire d'électrodes (102b) et un élément de retard (11d) ayant une surface plane à partir de laquelle un signal ultrasonore est émis, et qui est fixé au second générateur ultrasonore (10b),
un support de générateurs ultrasonores (100c) destiné à supporter les lentilles ultrasonores (101c et 101d), en maintenant un angle fixé (α) entre elles, et
des moyens analyseurs de spectre (16b),
les générateurs ultrasonores étant disposés dans le support de générateurs ultrasonores de manière qu'ils se trouvent du même côté d'un échantillon à travers lequel se propage le signal ultrasonore émis.

18. Un microscope acoustique à ultrasons selon la revendication 17, dans lequel
la surface concave est concave avec une forme sphérique.

19. Un microscope acoustique à ultrasons selon la revendication 17, dans lequel
la surface concave est concave avec une forme cylindrique.

20. Un microscope acoustique à ultrasons selon la revendication 17, dans lequel
la première lentille ultrasonore (101c) est destinée à générer un signal ultrasonore et la seconde lentille ultrasonore (101d) est destinée à recevoir un signal ultrasonore.

21. Un microscope acoustique à ultrasons selon la revendication 17, dans lequel
la seconde lentille ultrasonore (101d) est destinée à générer un signal ultrasonore et la première lentille, ultrasonore (101c) est destinée à recevoir un signal ultrasonore.
